# EUROPEAN PATENT SPECIFICATION

(11) **EP 4 508 101 B1**
(45) Date of publication and mention of the grant of the patent: **25.03.2026**
(21) Application number: 23718747.1
(22) Date of filing: 06.04.2023
(51) Int. Cl.: C08F 8/46, C08F 10/10

(54) **PROCESS FOR MANUFACTURING OF POLYISOBUTENE SUCCINIC ANHYDRIDES**
VERFAHREN ZUM HERSTELLEN VON POLYISOBUTEN-BERNSTEINSÄUREANHYDRIDEN
PROCÉDÉ POUR LA PRÉPARATION D'ANHYDRIDES D'ACIDES POLYISOBUTYLSUCCINIQUES

(30) Priority: 14.04.2022 EP 22168464
(43) Date of publication of application: 19.02.2025
(73) Proprietor: BASF SE, 67056 Ludwigshafen am Rhein (DE)
(72) Inventor: LEDERHOSE, Paul, 67056 Ludwigshafen am Rhein (DE); WETTLING, Thomas, 67056 Ludwigshafen am Rhein (DE); BRYM, Markus, 67056 Ludwigshafen am Rhein (DE); PIERRE, Bernard, 2040 Antwerpen (BE); LAM, Dao-Khac, 67056 Ludwigshafen am Rhein (DE)
(74) Representative: BASF IP Association
(86) International application number: PCT/EP2023/059210
(87) International publication number: WO 2023/198616

(56) References cited:
- WO-A1-2004/065432
- WO-A1-2013/120859
- US-A1- 2020 308 486

## Description

The present invention concerns a process for manufacturing polyisobutene succinic anhydrides from certain polyisobutene mixtures.

Polyisobutene succinic anhydrides are obtainable by reaction of polyisobutene with a high reactivity by a thermal ene-reaction with maleic anhydride. Such highly reactive polyisobutene shows a high content of alpha-double bonds of from 50 mol% to up to 90 mol% or even higher which are more reactive towards reaction with maleic anhydride than other isomers also contained in such polyisobutene mixtures.

The thermal ene-reaction is usually carried out at temperatures up to 280 °C with a stoichiometric excess of maleic anhydride, see e.g. US2020/308486 or EP 156310 A2 or WO 2017/216022. Depending on the reaction conditions often an excess pressure is applied.

It is a problem that the reaction mixture comprises not only the desired product polyisobutene succinic anhydride, which may be one- or twofold maleinated, but also unconverted highly reactive polyisobutene, and polyisobutene of low reactivity which was part of the starting material. Since these different compounds have a comparable molecular weight and the polarity is dominated by the long polyisobutene chain, it is usually not possible do separate the desired product polyisobutene succinic anhydride from the unwanted by-products not bearing a succinic anhydride group. Separation of these constituents is possible for analytical purposes to determine the content of maleinated polyisobutene but not on a larger scale.

Furthermore, due to the harsh reaction conditions, part of the starting material deteriorates and form brownish coloured residues which tend to discolour the product. Such homogenous discolourations cannot be removed due to the polymeric nature of the reaction mixture. Heterogenous discolourations, e.g. very high molecular weight polymers, may be removed by filtration, however, due to the polymeric nature of the reaction mixture the filter is frequently blocked. Furthermore, the formation of such very high molecular weight polymers leads to deposits in the reactor so that the reactor requires cleansing more often. Therefore, the necessity of a filtration step prolongs the cycle time of the reaction, whereas the necessity of cleansing of reactor and filters increases the downtime of the production plant.

Therefore, ways were sought to reduce the formation of resinous byproducts in the reaction of polyisobutene with maleic anhydride.

The problem was solved by a process for the preparation of polyisobutene succinic anhydrides by reacting highly reactive polyisobutene with content of alpha-double bonds of at least 50 mol% and maleic anhydride in a stoichiometric molar ratio of 0.6 mole of maleic anhydride : 1 mole of polyisobutene or higher at a temperature of 150 to 260 °C for 15 minutes up to 10 hours, characterised in that the highly reactive polyisobutene has a content of one or more ethers of the formula

PIB-O-R¹

in which
PIB represents a residue derived from polyisobutene and
R¹ is C₁- to C₁₀-alkyl
of at least 0.01 % by weight and less than 0.8 % by weight.

Another subject matter of the present invention are ether-containing mixtures of highly reactive polyisobutenes and their use.

Preferably the content of one or more ethers of the formula PIB-O-R¹ is 0.01 to less than 0.8 % by weight, more preferably 0.02 to 0.75, even more preferably 0.05 to 0.7, and especially 0.1 to 0.6 % by weight.

It is an advantage of the present invention that polyisobutene compositions comprising certain amounts of ethers form less resinous byproducts in a subsequent reaction with maleic anhydride. US 2004/0260027 A1 believes that such byproducts are formed by polymerisation of unsaturated mono- or dicarboxylic acid or anhydride compounds and are suspended in the reaction mixture in the form of sediment or deposited on the walls of the reactor as tar, e.g. by decomposition and/or self-polymerisation. Such byproducts are identified via by gel permeation chromatography or by residual deposits in the reactor.

The variable "PIB" represents a residue derived from polyisobutene which is formed by reaction of the highly reactive polyisobutene with an alkanol R¹OH or an ether with the substructure -OR¹. Usually this variable corresponds to the saturated polyisobutene after removal of one hydrogen atom at the position of the substituent -OR¹.

The residue R¹ is C₁- to C₁₀-alkyl, preferably C₁- to C₈-alkyl, more preferably C₁- to C₆-alkyl, and even more preferably C₁- to C₄-alkyl.

Preferred examples of R¹ are methyl, ethyl, n propyl, iso propyl, n-butyl, iso butyl, sec butyl, and tert butyl, more preferred are methyl, ethyl, iso propyl, n-butyl, iso butyl, and tert butyl, even more preferred are methyl, n-butyl, and tert butyl, with methyl being especially preferred.

Polyisobutene of the desired molecular weight is obtainable by polymerisation of isobutene or isobutene-containing feedstocks in the presence of at least one Lewis-acid usually in the presence of at least one donor and at least one initiator. Typical donors are ethers, alcohols, or ketones (see below). If an ether comprising the substructure R¹O- or alkanol R¹OH is used as donor respectively initiator the moiety R¹O- may be incorporated into the polyisobutene forming ethers of formula PIB-O-R¹.

In one embodiment of the present application the highly reactive polyisobutene comprising one or more ethers of the formula PIB-O-R¹ is obtained by polymerisation of an isobutene-containing reaction mixture using at least one Lewis acid in the presence of at least one alkanol R¹OH. Optionally, at least one ether additionally may be used bearing the substructure R¹-O- or not, preferably bearing the substructure R¹-O-.

In another embodiment of the present application the highly reactive polyisobutene comprising one or more ethers of the formula PIB-O-R¹ is obtained by polymerisation of an isobutene-containing reaction mixture using at least one Lewis acid in the presence of at least one ether bearing the substructure R¹-O-. Preferred are ethers R¹-O-R¹ or ethers R¹-O-R¹', wherein R¹' has the same meaning as R¹ but is different from the residue R¹. Optionally, the polymerisation may be performed in the presence of at least one alkanol R¹OH.

Therefore, subject matter of the present invention is a process as follows:
- in a first step polymerising an isobutene-containing reaction mixture in the presence of at least one Lewis-acid in the presence of at least one alkanol R¹OH under reaction conditions so that a polyisobutene is obtained with a content of ethers of the formula PIB-O-R¹ of at least 0.01 wt% and less than 0.8 % by weight,
- in a second step separating unreacted ingredients of the reaction mixture from the polyisobutene-containing product, and
- in a third step reacting the thus obtained ether-containing polyisobutene with maleic anhydride.

Processes for the preparation of highly reactive polyisobutene compositions, i.e. with a high content of alpha- and/or beta-double bonds, especially alpha-double bonds are known in the prior art.

Without wishing to be bound to any theory it is believed that the reactivity of the highly reactive polyisobutene in the thermal ene-reaction is predominantly attributable to the content of alpha-double bonds in the polyisobutene. It is conceivable that the beta-double bond or other isomers may also react under the reaction conditions, either directly or after isomerisation of the double bond into the alpha-double bond, however, this reaction usually occurs to a much lesser extent or even not significantly.

In the context of the present invention the term isomers bearing a "beta-double bond" refers to polyisobutene isomers with the sub-structure 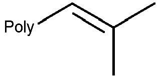 in which
"Poly" stands for the polymeric backbone of the polyisobutene except for the final incorporated isobutene unit.

In contrast, the term isomers bearing an "alpha-double bond" refers to polyisobutene isomers with the sub-structure

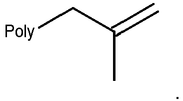

For the preparation of such highly reactive polyisobutene compositions usually isobutene or an isobutenic starting material is polymerised in the presence of at least one Lewis Acid-donor complex and an initiator.

As a Lewis Acid usually metal halides are used, preferably halides of boron, aluminium, iron, gallium, titanium, zinc or tin.

Typical examples are boron trifluoride, boron trichloride, aluminum trihalide, alkylaluminum dihalide, dialkylaluminum halide, iron trihalide, gallium trihalide, titanium tetrahalide, zinc dihalide, tin dihalide, tin tetrahalide, wherein the halide is preferably fluoride or chloride, more preferably chloride.

Preference is given to boron halides, aluminium halides, alkyl aluminium halides, and iron halides.

Preferred are boron trifluoride, aluminum trichloride, alkyl aluminum dichloride, dialkyl aluminum chloride, and iron trichloride, more preferred are boron trifluoride, aluminum trichloride, and alkyl aluminum dichloride, most preferred are boron trifluoride and aluminum trichloride with boron trifluoride being especially preferred.

Examples for suitable donor compounds comprise at least one oxygen and/or nitrogen atom with at least one lone electron pair, preferably at least one oxygen atom with at least one lone electron pair and very preferably are selected from the group consisting of organic compounds with at least one ether function, organic compounds with at least one carboxylic ester function, organic compounds with at least one aldehyde function, organic compounds with at least one keto function, and organic compounds with at least one nitrogen containing heterocyclic ring.

Solely oxygen containing donor compounds are preferred over nitrogen-containing donor compounds.

Preferably the donor is selected from the group consisting of organic compounds with at least one ether function, organic compounds with at least one carboxylic ester function and organic compounds with at least one keto function, more preferably selected from the group consisting of organic compounds with at least one ether function and organic compounds with at least one carboxylic ester function, very preferably donors are organic compounds with at least one ether function, and especially organic compounds with exactly one ether function.

Compounds with at least one ether function are also understood to mean acetals and hemiacetals. The ether compound may comprise one or more ether functions, e.g. one, two, three, four or even more ether functions, preferably one or two ether functions and very preferably one ether function.

The mixture of donors may comprise one, two, three, four or even more different compounds, preferably compounds with at least one ether function, preferably one or two different compounds and very preferably one compound.

It may be an advantage to use a mixture of two different donors, especially two different ethers, see e.g. WO 2017/1140603 for aluminium halide-donor complexes, or two different alcohols, see e.g. WO 13/120859 for boron halide-donor complexes.

In one embodiment of the present invention, if an alkanol R¹OH is used in the reaction a boron trihalide-donor complex, an aluminum trihalide-donor complex or an alkylaluminum halide complex, or an iron trihalide-donor complex, or a gallium trihalide-donor complex or a titanium tetrahalide-donor complex or a zinc dihalide-donor complex or a tin dihalide-donor complex or the tin tetrahalide-donor complex or the boron trihalide-donor complex, very preferably a boron trihalide-donor complex, an aluminum trihalide-donor complex or an iron trihalide-donor complex or a boron trihalide-donor complex and especially a boron trihalide-donor complex or an aluminum trihalide-donor complex is used, which comprises, as the donor, at least one dihydrocarbyl ether the general formula R⁸-O-R⁹ in which the variables R⁸ and R⁹ are each independently C₁- to C₂₀-alkyl radicals, preferably C₁- to C₈ alkyl radicals especially C₁- to C₄ alkyl radicals, C₁- to C₂₀-haloalkyl radicals, preferably C₁- to C₈ haloalkyl radicals especially C₁- to C₄ haloalkyl radicals, C₅- to C₈-cycloalkyl radicals, preferably C₅- to C₆-cycloalkyl radicals, C₆- to C₂₀-aryl radicals, especially C₆- to C₁₂ aryl radicals, c₆- to C₂₀-haloaryl radicals, especially C₆- to C₁₂ haloaryl radicals, or C₇- to C₂₀-arylalkyl radicals, especially C₇- to C₁₂-arylalkyl radicals. Preference is given to C₁- to C₄ alkyl radicals, C₁- to C₄ haloalkyl radicals, C₆- to C₁₂ aryl radicals, and C₇- to C₁₂-arylalkyl radicals

The at least one dihydrocarbyl ether of the general formula R⁸-O-R⁹ may be an ether R¹-O-R¹ or R¹-O-R¹' mentioned above in preferred embodiment of the present invention or may be different from such an ether.

Haloalkyl and haloaryl mean preferably chloroalkyl or bromoalkyl and chloroaryl or bromoaryl, very preferably chloroalkyl and chloroaryl. Especially preferred are w-haloalkyl radicals.

Preferred examples are chloromethyl, 1-chloroeth-1-yl, 2-chloroeth-1-yl, 2-chloroprop-1-yl, 2-chloroprop-2-yl, 3-chloroprop-1-yl, and 4-chlorobut-1-yl.

Preferred examples for chloroaryl are 2-chlorophenyl, 3-chlorophenyl, and 4-chlorophenyl.

The dihydrocarbyl ethers mentioned may be open-chain or cyclic, where the two variables R⁸ and R⁹ in the case of the cyclic ethers may join to form a ring, where such rings may also comprise two or three ether oxygen atoms. Examples of such open-chain and cyclic dihydrocarbyl ethers are dimethyl ether, chloromethyl methyl ether, bis (chloromethyl) ether, diethyl ether, chloromethyl ethyl ether, 2-chloroethyl ethyl ether (CEE), bis (2-chloroethyl) ether (CE), di-n-propyl ether, diisopropyl ether, di-n-butyl ether, di-sec-butyl ether, diisobutyl ether, di-n-pentyl ether, di-n-hexyl ether, di-n-heptyl ether, di-n-octyl ether, di-(2-ethylhexyl) ether, methyl n-butyl ether, methyl sec-butyl ether, methyl isobutyl ether, methyl tert-butyl ether, ethyl n-butyl ether, ethyl sec-butyl ether, ethyl isobutyl ether, ethyl tert-butyl ether, n-propyl-n-butyl ether, n-propyl sec-butyl ether, n-propyl isobutyl ether, n-propyl tert-butyl ether, isopropyl n-butyl ether, isopropyl sec-butyl ether, isopropyl isobutyl ether, isopropyl tert-butyl ether, methyl n-hexyl ether, methyl n-octyl ether, methyl 2-ethylhexyl ether, ethyl n-hexyl ether, ethyl n-octyl ether, ethyl 2-ethylhexyl ether, n-butyl n-octyl ether, n-butyl 2-ethylhexyl ether, tetrahydrofuran, tetrahydropyran, 1,2-, 1,3- and 1,4-dioxane, dicyclohexyl ether, diphenyl ether, alkyl aryl ethers, such as anisole and phenetole, ditolyl ether, dixylyl ether and dibenzyl ether.

Furthermore, difunctional ethers such as dialkoxybenzenes, preferably dimethoxybenzenes, very preferably veratrol, and ethylene glycol dialkylethers, preferably ethylene glycol dimethylether and ethylene glycol diethylether, are preferred.

Among the dihydrocarbyl ethers mentioned, diethyl ether, 2-chloroethyl ethyl ether, diisopropyl ether, di-n-butyl ether and diphenyl ether have been found to be particularly advantageous as donors for the boron trihalide-donor complexes, the aluminum trihalide-donor complexes or the alkylaluminum halide complexes or the iron trihalide-donor complexes or the gallium trihalide-donor complex or the titanium tetrahalide-donor complex or the zinc dihalide-donor complex or the tin dihalide-donor complex or the tin tetrahalide-donor complex or the boron trihalide-donor complex, very preferably boron trihalide-donor complexes, the aluminum trihalide-donor complexes or iron trihalide-donor complexes or boron trihalide-donor complex and especially the a boron trihalide-donor complexes or the aluminum trihalide-donor complexes.

In a preferred embodiment dihydrocarbyl ethers with at least one secondary or tertiary dihydrocarbyl group are preferred over dihydrocarbyl groups with primary groups only. Ethers with primary dihydrocarbyl groups are those ethers in which both dihydrocarbyl groups are bound to the ether functional group with a primary carbon atom, whereas ethers with at least one secondary or tertary dihydrocarbyl group are those ethers in which at least one dihydrocarbyl group is bound to the ether functional group with a secondary or tertiary carbon atom.

For the sake of clarity, e.g. diisobutyl ether is deemed to be an ether with primary dihydrocarbyl groups, since the secondary carbon atom of the isobutyl group is not bound to the oxygen of the functional ether group but the hydrocarbyl group is bound via a primary carbon atom.

Preferred examples for ethers with primary dihydrocarbyl groups are diethyl ether, di-n-butyl ether, and di-n-propyl ether.

Preferred examples for ethers with at least one secondary or tertary dihydrocarbyl group are diisopropyl ether, methyl tert-butyl ether, ethyl tert-butyl ether, and anisole.

In addition, particularly advantageous dihydrocarbyl ethers as donors for the boron trihalide-donor complexes, the aluminum trihalide-donor complexes or the alkylaluminum halide complexes, have been found to be those in which the donor compound has a total carbon number of 3 to 16, preferably of 4 to 16, especially of 4 to 12, in particular of 4 to 8.

In another preferred embodiment halide-substituted ethers are preferred in combination with aluminum halide-donor complex or iron halide-donor complex or boron halide-donor complex.

Organic compounds with at least one carboxylic ester function are preferably hydrocarbyl carboxylates of the general formula R¹⁰-COOR¹¹ in which the variables R¹⁰ and R¹¹ are each independently C₁- to C₂₀-alkyl radicals, especially C₁- to C₈ alkyl radicals, C₅- to C₈-cycloalkyl radicals, C₆- to C₂₀-aryl radicals, especially C₆- to C₁₂ aryl radicals, or C₇- to C₂₀-arylalkyl radicals, especially C₇- to C₁₂-arylalkyl radicals.

Examples of the hydrocarbyl carboxylates mentioned are methyl formate, ethyl formate, n-propyl formate, isopropyl formate, n-butyl formate, sec-butyl formate, isobutyl formate, tert-butyl formate, methyl acetate, ethyl acetate, n-propyl acetate, isopropyl acetate, n-butyl acetate, sec-butyl acetate, isobutyl acetate, tert-butyl acetate, methyl propionate, ethyl propionate, n-propyl propionate, isopropyl propionate, n-butyl propionate, sec-butyl propionate, isobutyl propionate, tert-butyl propionate, methyl butyrate, ethyl butyrate, n-propyl butyrate, isopropyl butyrate, n-butyl butyrate, sec-butyl butyrate, isobutyl butyrate, tert-butyl butyrate, methyl cyclohexanecarboxylate, ethyl cyclohexanecarboxylate, n-propyl cyclohexanecarboxylate, isopropyl cyclohexanecarboxylate, n-butyl cyclohexanecarboxylate, sec-butyl cyclohexanecarboxylate, isobutyl cyclohexanecarboxylate, tert-butyl cyclohexanecarboxylate, methyl benzoate, ethyl benzoate, n-propyl benzoate, isopropyl benzoate, n-butyl benzoate, sec-butyl benzoate, isobutyl benzoate, tert-butyl benzoate, methyl phenylacetate, ethyl phenylacetate, n-propyl phenylacetate, isopropyl phenylacetate, n-butyl phenylacetate, sec-butyl phenylacetate, isobutyl phenylacetate and tert-butyl phenylacetate. Among the hydrocarbyl carboxylates mentioned, ethyl acetate has been found to be particularly advantageous as a donor for the complexes.

In addition, particularly advantageous hydrocarbyl carboxylates as donors, have been found to be those in which the donor compound has a total carbon number of 3 to 16, preferably of 4 to 16, especially of 4 to 12, in particular of 4 to 8, preference is given in particular to those having a total of 3 to 10 and especially 4 to 6 carbon atoms.

Organic compounds with at least one aldehyde function, preferably exactly one aldehyde function and organic compounds with at least one keto function, preferably exactly one keto function typically have from 1 to 20, preferably from 2 to 10 carbon atoms. Functional groups other than the carbonyl group are preferably absent.

Preferred organic compounds with at least one aldehyde function are those of formula R¹⁰-CHO, in which R¹⁰ has the above-mentioned meaning, very preferably are selected from the group consisting of formaldehyde, acetaldehyde, propionaldehyde, n-butyraldehyde, isobutyraldehyde, and benzaldehyde.

Preferred organic compounds with at least one keto function are those of formula R¹⁰-(C=O)-R¹¹, in which R¹⁰ and R¹¹ have the above-mentioned meaning, very preferably are selected from the group consisting of acetone, methyl ethyl ketone, diethyl ketone, methyl isobutyl ketone, cyclohexanone, acetophenone, and benzophenone. Greatest preference is given to acetone.

Organic compounds with at least one nitrogen containing heterocyclic ring are preferably saturated, partly unsaturated or unsaturated nitrogen-containing five-membered or six-membered heterocyclic rings which comprises one, two or three ring nitrogen atoms and may have one or two further ring heteroatoms from the group of oxygen and sulphur and/or hydrocarbyl radicals, especially C₁- to C₄-alkyl radicals and/or phenyl, and/or functional groups or heteroatoms as substituents, especially fluorine, chlorine, bromine, nitro and/or cyano, for example pyrrolidine, pyrrole, imidazole, 1,2,3- or 1,2,4-triazole, oxazole, thiazole, piperidine, pyrazane, pyrazole, pyridazine, pyrimidine, pyrazine, 1,2,3-, 1,2,4- or 1,2,5-triazine, 1,2,5-oxathiazine, 2H-1,3,5-thiadiazine or morpholine.

However, a very particularly suitable nitrogen-containing basic compound of this kind is pyridine or a derivative of pyridine (especially a mono-, di- or tri-C₁- to C₄-alkyl-substituted pyridine) such as 2-, 3-, or 4-methylpyridine (picolines), 2,3-, 2,4-, 2,5-, 2,6-, 3,4-, 3,5- or 3,6-dimethylpyridine (lutidines), 2,4,6-trimethylpyridine (collidine), 2-, 3,- or 4-tert-butylpyridine, 2-tert-butyl-6-methylpyridine, 2,4-, 2,5-, 2,6- or 3,5-di-tert-butylpyridine or else 2-, 3,- or 4-phenylpyridine.

The molar ratio of the donor compounds mentioned to the Lewis Acid, preferably the boron halide or aluminum trihalide or to the alkylaluminum halide, especially to the boron fluoride or aluminum trichloride, in the donor complex generally varies within the range from 0.3:1 to 1.5:1, especially from 0.5:1 to 1.2:1, in particular 0.7:1 to 1.1:1; in most cases it is 1:1.

### Initiator:

The polymerization is preferably performed with additional use of a mono- or polyfunctional, especially mono-, di- or trifunctional, initiator which is selected from organic hydroxyl compounds, organic halogen compounds and water. It is also possible to use mixtures of the initiators mentioned, for example mixtures of two or more organic hydroxyl compounds, mixtures of two or more organic halogen compounds, mixtures of one or more organic hydroxyl compounds and one or more organic halogen compounds, mixtures of one or more organic hydroxyl compounds and water, or mixtures of one or more organic halogen compounds and water. The initiator may be mono-, di- or polyfunctional, i.e. one, two or more hydroxyl groups or halogen atoms, which start the polymerization reaction, may be present in the initiator molecule. In the case of di- or polyfunctional initiators, telechelic isobutene polymers with two or more, especially two or three, polyisobutene chain ends are typically obtained.

Organic hydroxyl compounds which have only one hydroxyl group in the molecule and are suitable as monofunctional initiators include especially alcohols and phenols, in particular those of the general formula R¹²-OH, in which R¹² denotes C₁- to C₂₀-alkyl radicals, especially C₁- to C₈-alkyl radicals, C₅- to c₈-cycloalkyl radicals, C₆- to C₂₀-aryl radicals, especially C₆- to C₁₂-aryl radicals, or C₇- to C₂₀-arylalkyl radicals, especially C₇- to C₁₂-arylalkyl radicals. In addition, the R¹² radicals may also comprise mixtures of the abovementioned structures and/or have other functional groups than those already mentioned, for example a keto function, a nitroxide or a carboxyl group, and/or heterocyclic structural elements.

Typical examples of such organic monohydroxyl compounds are methanol, ethanol, n-propanol, isopropanol, n-butanol, sec-butanol, isobutanol, tert-butanol, n-pentanol, n-hexanol, n-heptanol, n-octanol, 2-ethylhexanol, cyclohexanol, phenol, p-methoxyphenol, o-, m- and p-cresol, benzyl alcohol, p-methoxybenzyl alcohol, 1- and 2-phenylethanol, 1- and 2-(p-methoxyphenyl)ethanol, 1-, 2- and 3-phenyl-1-propanol, 1-, 2- and 3-(p-methoxyphenyl)-1-propanol, 1- and 2-phenyl-2-propanol, 1- and 2-(p-methoxyphenyl)-2-propanol, 1-, 2-, 3- and 4-phenyl-1-butanol, 1-, 2-, 3- and 4-(p-methoxyphenyl)-1-butanol, 1-, 2-, 3- and 4-phenyl-2-butanol, 1-, 2-, 3- and 4-(p-methoxyphenyl)-2-butanol, 9-methyl-9H-fluoren-9-ol, 1,1-diphenylethanol, 1,1-diphenyl-2-propyn-1-ol, 1,1-diphenylpropanol, 4-(1-hydroxy-1-phenylethyl)benzonitrile, cyclopropyldiphenylmethanol, 1-hydroxy-1,1-diphenylpropan-2-one, benzilic acid, 9-phenyl-9-fluorenol, triphenylmethanol, diphenyl(4-pyridinyl)methanol, alpha,alpha-diphenyl-2-pyridinemethanol, 4-methoxytrityl alcohol (especially polymer-bound as a solid phase), alpha-tert-butyl-4-chloro-4'-methylbenzhydrol, cyclohexyldiphenylmethanol, alpha-(p-tolyl)-benzhydrol, 1,1,2-triphenylethanol, alpha, alpha-diphenyl-2-pyridineethanol, alpha,alpha-4-pyridylbenzhydrol N-oxide, 2-fluorotriphenylmethanol, triphenylpropargyl alcohol, 4-[(diphenyl)hydroxymethyl]benzonitrile, 1-(2,6-dimethoxyphenyl)-2-methyl-1-phenyl-1-propanol, 1,1,2-triphenylpropan-1-ol and p-anisaldehyde carbinol.

In a preferred embodiment it is possible to use a mixture of primary and secondary alcohols as initiators, as described in WO 2013/120859.

In one preferred embodiment of the present invention the alkanol R¹OH is used as an initiator in the polymerisation.

The amount of alkanol R¹OH in the reaction mixture is usually a molar ratio of alkanol R¹OH : isobutene of 0.00025 to 0.0025 : 1, preferably 0.0004 to 0.002 : 1, more preferably 0.0005 to 0.001 : 1, and even more preferably 0.0006 to 0.0009 : 1.

The molar ratio of alkanol R¹OH : Lewis-acid of 1 to 2 : 1, preferably from 1.1 to 1.9 : 1, more preferably from 1.2 to 1.8 : 1, and especially from 1.25 to 1.75 : 1.

Organic hydroxyl compounds which have two hydroxyl groups in the molecule and are suitable as bifunctional initiators are especially dihydric alcohols or diols having a total carbon number of 2 to 30, especially of 3 to 24, in particular of 4 to 20, and bisphenols having a total carbon number of 6 to 30, especially of 8 to 24, in particular of 10 to 20, for example ethylene glycol, 1,2- and 1,3-propylene glycol, 1,4-butylene glycol, 1,6-hexylene glycol, 1,2-, 1,3- or 1,4-bis(1-hydroxy-1-methylethyl)benzene (o-, m- or p-dicumyl alcohol), bisphenol A, 9,10-di-hydro-9,10-dimethyl-9,10-anthracenediol, 1,1-diphenylbutane-1,4-diol, 2-hydroxytriphenylcarbinol and 9-[2-(hydroxymethyl)phenyl]-9-fluorenol.

Organic halogen compounds which have one halogen atom in the molecule and are suitable as monofunctional initiators are in particular compounds of the general formula R¹³-Hal in which Hal is a halogen atom selected from fluorine, iodine and especially chlorine and bromine, and R¹³ denotes C₁- to C₂₀-alkyl radicals, especially C₁- to C₈-alkyl radicals, C₅- to C₈-cycloalkyl radicals or C₇- to C₂₀-arylalkyl radicals, especially C₇- to C₁₂-arylalkyl radicals. In addition, the R¹³ radicals may also comprise mixtures of the abovementioned structures and/or have other functional groups than those already mentioned, for example a keto function, a nitroxide or a carboxyl group, and/or heterocyclic structural elements.

Typical examples of such monohalogen compounds are methyl chloride, methyl bromide, ethyl chloride, ethyl bromide, 1-chloropropane, 1-bromopropane, 2-chloropropane, 2-bromopropane, 1-chlorobutane, 1-bromobutane, sec-butyl chloride, sec-butyl bromide, isobutyl chloride, isobutyl bromide, tert-butyl chloride, tert-butyl bromide, 1-chloropentane, 1-bromopentane, 1-chlorohexane, 1-bromohexane, 1-chloroheptane, 1-bromoheptane, 1-chlorooctane, 1-bromooctane, 1-chloro-2-ethylhexane, 1-bromo-2-ethylhexane, cyclohexyl chloride, cyclohexyl bromide, benzyl chloride, benzyl bromide, 1-phenyl-1-chloroethane, 1-phenyl-1-bromoethane, 1-phenyl-2-chloroethane, 1-phenyl-2-bromoethane, 1-phenyl-1-chloropropane, 1-phenyl-1-bromopropane, 1-phenyl-2-chloropropane, 1-phenyl-2-bromopropane, 2-phenyl-2-chloropropane, 2-phenyl-2-bromopropane, 1-phenyl-3-chloropropane, 1-phenyl-3-bromopropane, 1-phenyl-1-chlorobutane, 1-phenyl-1-bromobutane, 1-phenyl-2-chlorobutane, 1-phenyl-2-bromobutane, 1-phenyl-3-chlorobutane, 1-phenyl-3-bromobutane, 1-phenyl-4-chlorobutane, 1-phenyl-4-bromobutane, 2-phenyl-1-chlorobutane, 2-phenyl-1-bromobutane, 2-phenyl-2-chlorobutane, 2-phenyl-2-bromobutane, 2-phenyl-3-chlorobutane, 2-phenyl-3-bromobutane, 2-phenyl-4-chlorobutane and 2-phenyl-4-bromobutane.

Organic halogen compounds which have two halogen atoms in the molecule and are suitable as difunctional initiators are, for example, 1,3-bis(1-bromo-1-methylethyl)benzene, 1,3-bis(2-chloro-2-propyl)benzene (1,3-dicumyl chloride) and 1,4-bis(2-chloro-2-propyl)benzene (1,4-dicumyl chloride).

The initiator is more preferably selected from organic hydroxyl compounds in which one or more hydroxyl groups are each bonded to an sp³-hybridized carbon atom, organic halogen compounds, in which one or more halogen atoms are each bonded to an sp³-hybridized carbon atom, and water. Among these, preference is given in particular to an initiator selected from organic hydroxyl compounds in which one or more hydroxyl groups are each bonded to an sp³-hybridized carbon atom.

In the case of the organic halogen compounds as initiators, particular preference is further given to those in which the one or more halogen atoms are each bonded to a secondary or especially to a tertiary sp³-hybridized carbon atom.

Preference is given in particular to initiators which may bear, on such an sp³-hydridized carbon atom, in addition to the hydroxyl group, the R¹², R¹³ and R¹⁴ radicals, which are each independently hydrogen, C₁- to C₂₀-alkyl, C₅- to C₈-cycloalkyl, C₆- to C₂₀-aryl, C₇- to C₂₀-alkylaryl or phenyl, where any aromatic ring may also bear one or more, preferably one or two, C₁- to C₄-alkyl, C₁- to C₄-alkoxy, C₁- to C₄-hydroxyalkyl or C₁- to C₄-haloalkyl radicals as substituents, where not more than one of the variables R¹², R¹³ and R¹⁴ is hydrogen and at least one of the variables R¹², R¹³ and R¹⁴ is phenyl which may also bear one or more, preferably one or two, C₁- to C₄-alkyl, C₁- to C₄-alkoxy, C₁- to C₄-hydroxyalkyl or C₁- to C₄-haloalkyl radicals as substituents.

For the present invention, very particular preference is given to initiators selected from water, methanol, ethanol, 1-phenylethanol, 1-(p-methoxyphenyl)ethanol, n-propanol, isopropanol, 2-phenyl-2-propanol (cumene), n-butanol, isobutanol, sec.-butanol, tert-butanol, 1-phenyl-1-chloroethane, 2-phenyl-2-chloropropane (cumyl chloride), tert-butyl chloride and 1,3- or 1,4-bis(1-hydroxy-1-methylethyl)benzene. Among these, preference is given in particular to initiators selected from water, methanol, ethanol, 1-phenylethanol, 1-(p-methoxyphenyl)ethanol, n-propanol, isopropanol, 2-phenyl-2-propanol (cumene), n-butanol, isobutanol, sec.-butanol, tert-butanol, 1-phenyl-1-chloroethane and 1,3- or 1,4-bis(1-hydroxy-1-methylethyl)benzene.

Special preference is given to water.

### Starting material for polymerisation

For the use of isobutene or of an isobutene-comprising monomer mixture as the monomer to be polymerized, suitable isobutene sources are both pure isobutene and isobutenic C₄ hydrocarbon streams, for example C₄ raffinates, especially "raffinate 1", C₄ cuts from isobutane dehydrogenation, C₄ cuts from steam crackers and from FCC crackers (fluid catalyzed cracking), provided that they have been substantially freed of 1,3-butadiene present therein. A C₄ hydrocarbon stream from an FCC refinery unit is also known as "b/b" stream. Further suitable isobutenic C₄ hydrocarbon streams are, for example, the product stream of a propylene-isobutane cooxidation or the product stream from a metathesis unit, which are generally used after customary purification and/or concentration. Suitable C₄ hydrocarbon streams generally comprise less than 500 ppm, preferably less than 200 ppm, of butadiene. The presence of 1-butene and of cis- and trans-2-butene is substantially uncritical. Typically, the isobutene concentration in the C₄ hydrocarbon streams mentioned is in the range from 40 to 60% by weight. For instance, raffinate 1 generally consists essentially of 30 to 50% by weight of isobutene, 10 to 50% by weight of 1-butene, 10 to 40% by weight of cis- and trans-2-butene, and 2 to 35% by weight of butanes; in the polymerization process according to the invention, the unbranched butenes in the raffinate 1 generally behave virtually inertly, and only the isobutene is polymerized.

In a preferred embodiment, the monomer source used for the polymerization is a technical C₄ hydrocarbon stream with an isobutene content of 1 to 100% by weight, especially of 1 to 99% by weight, in particular of 1 to 90% by weight, more preferably of 30 to 60% by weight, especially a raffinate 1 stream, a b/b stream from an FCC refinery unit, a product stream from a propylene-isobutane cooxidation or a product stream from a metathesis unit.

Especially when a raffinate 1 stream is used as the isobutene source, the use of water as the sole initiator or as a further initiator has been found to be useful, in particular when polymerization is effected at temperatures of -20°C to +30°C, especially of 0°C to +20°C. At temperatures of -20°C to +30°C, especially of 0°C to +20°C, when a raffinate 1 stream is used as the isobutene source, it is, however, also possible to dispense with the use of an initiator.

The isobutenic monomer mixture mentioned may comprise small amounts of contaminants such as water, carboxylic acids or mineral acids, without there being any critical yield or selectivity losses. It is appropriate to prevent enrichment of these impurities by removing such harmful substances from the isobutenic monomer mixture, for example by adsorption on solid adsorbents such as activated carbon, molecular sieves or ion exchangers.

It is also possible to convert monomer mixtures of isobutene or of the isobutenic hydrocarbon mixture with olefinically unsaturated monomers copolymerizable with isobutene. When monomer mixtures of isobutene are to be copolymerized with suitable comonomers, the monomer mixture preferably comprises at least 5% by weight, more preferably at least 10% by weight and especially at least 20% by weight of isobutene, and preferably at most 95% by weight, more preferably at most 90% by weight and especially at most 80% by weight of comonomers.

Useful copolymerizable monomers include: vinylaromatics such as styrene and α-methylstyrene, C₁- to C₄-alkylstyrenes such as 2-, 3- and 4-methylstyrene, and 4-tert-butylstyrene, halostyrenes such as 2-, 3- or 4-chlorostyrene, and isoolefins having 5 to 10 carbon atoms, such as 2-methylbutene-1, 2-methylpentene-1, 2-methylhexene-1, 2-ethylpentene-1, 2-ethylhexene-1 and 2-propylheptene-1. Further useful comonomers include olefins which have a silyl group, such as 1-trimethoxysilylethene, 1-(trimethoxysilyl)propene, 1-(trimethoxysilyl)-2-methylpropene-2, 1-[tri(methoxyethoxy)-silyl]ethene, 1-[tri(methoxyethoxy)silyl]propene, and 1-[tri(methoxyethoxy)silyl]-2-methylpro-pene-2. In addition - depending on the polymerization conditions - useful comonomers also include isoprene, 1-butene and cis- and trans-2-butene.

When the process according to the invention is to be used to prepare copolymers, the process can be configured so as to preferentially form random polymers or to preferentially form block copolymers. To prepare block copolymers, for example, the different monomers can be supplied successively to the polymerization reaction, in which case the second comonomer is especially not added until the first comonomer is already at least partly polymerized. In this manner, di-block, triblock and higher block copolymers are obtainable, which, according to the sequence of monomer addition, have a block of one or the other comonomer as a terminal block. In some cases, however, block copolymers also form when all comonomers are supplied to the polymerization reaction simultaneously, but one of them polymerizes significantly more rapidly than the other(s). This is the case especially when isobutene and a vinylaromatic compound, especially styrene, are copolymerized in the process according to the invention. This preferably forms block copolymers with a terminal polystyrene block. This is attributable to the fact that the vinylaromatic compound, especially styrene, polymerizes significantly more slowly than isobutene.

The polymerization can be effected either continuously or batchwise. Continuous processes can be performed in analogy to known prior art processes for continuous polymerization of isobutene in the presence of boron trifluoride-based catalysts in the liquid phase.

The process according to the invention is suitable either for performance at low temperatures, e.g. at -90°C to 0°C, or at higher temperatures, i.e. at at least 0°C, e.g. at 0°C to +30°C or at 0°C to +50°C. The polymerization in the process according to the invention is, however, preferably performed at relatively low temperatures, generally at -70°C to -10°C, especially at -60°C to -15°C.

When the polymerization in the process according to the invention is effected at or above the boiling temperature of the monomer or monomer mixture to be polymerized, it is preferably performed in pressure vessels, for example in autoclaves or in pressure reactors.

The polymerization in the process may be performed in the presence of an inert diluent. The inert diluent used should be suitable for reducing the increase in the viscosity of the reaction solution which generally occurs during the polymerization reaction to such an extent that the removal of the heat of reaction which evolves can be ensured. Suitable diluents are those solvents or solvent mixtures which are inert toward the reagents used. Suitable diluents are, for example, aliphatic hydrocarbons such as n-butane, n-pentane, n-hexane, n-heptane, n-octane and isooctane, cycloaliphatic hydrocarbons such as cyclopentane and cyclohexane, aromatic hydrocarbons such as benzene, toluene and the xylenes, and halogenated hydrocarbons, especially halogenated aliphatic hydrocarbons, such as methyl chloride, dichloromethane and trichloromethane (chloroform), 1,1-dichloroethane, 1,2-dichloroethane, trichloroethane and 1-chlorobutane, and also halogenated aromatic hydrocarbons and alkylaromatics halogenated in the alkyl side chains, such as chlorobenzene, monofluoromethylbenzene, difluoromethylbenzene and trifluoromethylbenzene, and mixtures of the aforementioned diluents. The diluents used, or the constituents used in the solvent mixtures mentioned, are also the inert components of isobutenic C₄ hydrocarbon streams. A non-halogenated solvent is preferred over the list of halogenated solvents.

The polymerization may be performed in a halogenated hydrocarbon, especially in a halogenated aliphatic hydrocarbon, or in a mixture of halogenated hydrocarbons, especially of halogenated aliphatic hydrocarbons, or in a mixture of at least one halogenated hydrocarbon, especially a halogenated aliphatic hydrocarbon, and at least one aliphatic, cycloaliphatic or aromatic hydrocarbon as an inert diluent, for example a mixture of dichloromethane and n-hexane, typically in a volume ratio of 10:90 to 90:10, especially of 50:50 to 85:15. Prior to use, the diluents are preferably freed of impurities such as water, carboxylic acids or mineral acids, for example by adsorption on solid adsorbents such as activated carbon, molecular sieves or ion exchangers. In a preferred embodiment, the polymerization is performed in halogen-free aliphatic or especially halogen-free aromatic hydrocarbons, especially toluene. For this embodiment, water in combination with the organic hydroxyl compounds mentioned and/or the organic halogen compounds mentioned, or especially as the sole initiator, have been found to be particularly advantageous.

In another preferred embodiment, the polymerization is performed in halogen-free aliphatic or cycloaliphatic, preferably aliphatic hydrocarbons, especially hexane, pentane, heptane, cyclohexane, cyclopentane, and mixtures comprising them.

The polymerization is preferably performed under substantially aprotic and especially under substantially anhydrous reaction conditions. Substantially aprotic and substantially anhydrous reaction conditions are understood to mean that, respectively, the content of protic impurities and the water content in the reaction mixture are less than 50 ppm and especially less than 5 ppm. In general, the feedstocks will therefore be dried before use by physical and/or chemical measures. More particularly, it has been found to be useful to admix the aliphatic or cycloaliphatic hydrocarbons used as solvents, after customary prepurification and predrying with an organometallic compound, for example an organolithium, organomagnesium or organoaluminum compound, in an amount which is sufficient to substantially remove the water traces from the solvent. The solvent thus treated is then preferably condensed directly into the reaction vessel. It is also possible to proceed in a similar manner with the monomers to be polymerized, especially with isobutene or with the isobutenic mixtures. Drying with other customary desiccants such as molecular sieves or predried oxides such as aluminum oxide, silicon dioxide, calcium oxide or barium oxide is also suitable. The halogenated solvents for which drying with metals such as sodium or potassium or with metal alkyls is not an option are freed of water or water traces with desiccants suitable for that purpose, for example with calcium chloride, phosphorus pentoxide or molecular sieves. It is also possible in an analogous manner to dry those feedstocks for which treatment with metal alkyls is likewise not an option, for example vinylaromatic compounds. Even if some or all of the initiator used is water, residual moisture should preferably be very substantially or completely removed from solvents and monomers by drying prior to reaction, in order to be able to use the water initiator in a controlled, specified amount, as a result of which greater process control and reproducibility of the results are obtained.

The polymerization reaction is appropriately terminated by adding excess amounts of water or of basic material, for example gaseous or aqueous ammonia or aqueous alkali metal hydroxide solution such as sodium hydroxide solution.

After unconverted C₄ monomers have been removed, the crude polymerization product is typically washed repeatedly with distilled or deionized water, in order to remove adhering inorganic constituents. To achieve high purities or to remove undesired low and/or high molecular weight fractions, the polymerization reaction mixture can be fractionally distilled under reduced pressure.

The thus obtainable polyisobutene composition may have a content of polyisobutene species bearing an alpha-double bond of at least 50 mol%, preferably at least 60 mol%, more preferably at least 70 mol%, even more preferably at least 80 mol%, and especially at least 90 mol%.

It is also possible to use the reaction mixture from the polymerisation after desactivation of the catalyst and optionally after removal of the hydrolysis products by washing in the reaction with maleic acid anhydride without further purification. Besides the polyisobutene composition with a content of polyisobutene species bearing an alpha-double bond of at least 50 mol% such a reaction mixture may contain unreacted monomer and lower oligomers of isobutene.

The undistilled reaction mixture differs from the polyisobutene composition insofar that it additionally comprises isobutene and those lower oligomers of isobutene which are usually separated from the reaction mixture by distillation.

Such lower oligomers of isobutene can be diisobutene, triisobutene, tetraisobutene, pentaisobutene, hexaisobutene, heptaisobutene, and octaisobutene. Higher oligomers of isobutene usually remain in the polyisobutene composition since they are not significantly volatile under distillation conditions, even under reduced pressure.

The content of unreacted isobutene may be up to 40 wt%, preferably up to 30 wt%, more preferably up to 20 wt%.

The content of unreacted lower oligomers mentioned above may be up to 5 wt%, preferably up to 3 wt%.

The distribution of alpha- and beta-double bond isomers among the oligomers is usually comparable to that of the polymer mixture, preferably it is the same.

In one embodiment of the present application the highly reactive polyisobutene comprising one or more ethers of the formula PIB-O-R¹ is obtained by polymerisation of an isobutene-containing reaction mixture using at least one Lewis acid in the presence of at least one alkanol R¹OH. Optionally, at least one ether additionally may be used bearing the substructure R¹-O- or not, preferably bearing the substructure R¹-O-.

In another embodiment of the present application the highly reactive polyisobutene comprising one or more ethers of the formula PIB-O-R¹ is obtained by polymerisation of an isobutene-containing reaction mixture using at least one Lewis acid in the presence of at least one ether bearing the substructure R¹-O-. Preferred are ethers R¹-O-R¹ or ethers R¹-O-R¹', wherein R¹' has the same meaning as R¹ but is different from the residue R¹. Optionally, the polymerisation may be performed in the presence of at least one alkanol R¹OH.

The alkanol R¹OH and/or ethers R¹-O-R¹ or R¹-O-R¹' are partly employed to form the donor complex with the Lewis Acid used, see the molar ratios disclosed above. The excess alkanol R¹OH and/or ethers R¹-O-R¹ or R¹-O-R¹' not being used for the formation of the donor complex is incorporated into polyisobutene chain forming the ether of the formula PIB-O-R¹.

Therefore, a higher content of alkanol R¹OH and/or ethers R¹-O-R¹ or R¹-O-R¹' usually leads to an increased content of ether PIB-O-R¹.

In contrast, a lower content of alkanol R¹OH and/or ethers R¹-O-R¹ or R¹-O-R¹' usually leads to a decreased content of ether PIB-O-R¹.

The alkanol R¹OH may also be a mixture of alkanols, the ether may also be a mixture of ethers R¹-O-R¹ or R¹-O-R¹'.

Usually methanol or methyl ethers exhibit the highest reactivity among alkanols R¹OH or ethers R¹-O-R¹ or R¹-O-R¹' and incorporation into the polyisobutene chain.

The reaction conditions for the formation of the ethers PIB-O-R¹ with regard to reaction temperature or reaction time are the same as for the polymerisation of isobutene outlined above.

A shorter reaction time usually favours a decreased content of ether PIB-O-R¹, while a longer reaction time leads to an increased content.

For the thermal ene-reaction with maleic acid anhydride it is possible to use a solution of the polyisobutene composition in at least one solvent as described above or to use the polyisobutene composition neat. In a preferred embodiment a 10 to 90 wt% solution of the polyisobutene composition in a solvent, preferably in a halide-free solvent is used in the thermal ene-reaction with maleic acid anhydride, preferably a 15 to 60 wt% solution, more preferably a 20 to 50, and especially 25 to 40 wt% solution.

In one embodiment the solvent may be the inert components of isobutenic C₄ hydrocarbon streams.

After being subjected to the thermal ene-reaction with maleic acid anhydride the solvent in the reaction mixture is preferably removed, more preferably removed by way of distillation.

Usually a single step evaporation is sufficient without rectification equipment and can be effected in a falling-film evaporator, a rising-film evaporator, a thin-film evaporator, a long-tube evaporator, a helical tube evaporator, a forced-circulation flash evaporator or a paddle dryer, for example a Discotherm^{®} dryer from List Technology AG, Switzerland, or a combination of these apparatuses.

The distillation is effected, as a rule, at 80 - 320°C, preferably 100 - 300°C, and 0.1 - 40, preferably 0.5 - 20 mbar.

Distillation may be assisted by leading an inert stripping through the evaporator, preferably nitrogen.

Such distillation and optionally stripping process yields a polyisobutene with a drastically reduced amount of solvent and monomer, even if n-hexane is used as a solvent. Therefore, it is possible to reduce the content of n-hexane in the compositions down to not more than 1000 ppm by weight, preferably not more than 900, more preferably not more than 800, and especially not more than 750 ppm by weight, and simultaneously the content of isobutene to not more than 30 ppm by weight, preferably not more than 25, more preferably not more than 20, and especially not more than 15 ppm by weight.

The amounts of isomers given throughout the text refer to mol%, unless explicitly stated otherwise. Since the determination of the individual or groups of isomers is conducted by NMR analysis the result of such NMR analysis is a percental distribution of certain NMR signals of these isomers relative to the integral of the respective nucleus determined.

The content of the ingredients in mol% can easily be converted into wt% by multiplication with the molecular weight of the respective species. Since isomers all have the same molecular weight, mol% and wt% are the same for isomers.

The number-average molecular weight Mₙ (determined by gel permeation chromatography) of the polyisobutene composition is from 500 to 10000, preferably from 550 to 5000, more preferably from 750 to 3000, most preferably from 900 to 2500, and especially from 900 to 1100.

For the thermal ene-reaction with maleic acid anhydride a stoichiometric molar ratio of 0.6 mole of maleic anhydride : 1 mole of polyisobutene or higher is used, preferably 0.8 mole of maleic anhydride per 1 mole of polyisobutene or higher, more preferably at least 1 mole of maleic anhydride per 1 mole of polyisobutene, even more preferably at least 1.1 : 1, and especially 1.2 : 1.

Large excesses of maleic acid anhydride result in increased amounts of bis- or even higher maleinated products, therefore, a stoichiometric molar ratio of 10 mole of maleic anhydride : 1 mole of polyisobutene is usually not exceeded, preferably up to 7.5 : 1, more preferably up to 5 : 1, even more preferably up to 4 : 1, and especially up to 3 : 1, unless a high degree of bis-maleinated products is desired or acceptable.

The thermal ene reaction is carried out at a temperature of from 150 to 260 °C, preferably 175 to 250 °C, more preferably 190 to 240 °C.

The reaction time is from 15 minutes to 10 hours, preferably from 30 minutes to 9 hours, more preferably from 1 to 8 hours, even more preferably from 2 to 7, and especially from 3 to 6 hours. Of course, the reaction time depends on the temperature applied to the reaction mixture.

It is striven to achieve a conversion of the minority compound in the reaction mixture of at least 75%, preferably of at least 80%, even more preferably of at least 85%, most preferably of at least 90%, and especially of at least 95% or even at least 98%.

As pointed out above the reaction is preferably carried out in solution, but may also less preferably be carried out neat.

As a solvent further to the above-mentioned solvents high boiling hydrocarbons may preferably be used.

Examples for such high boiling hydrocarbons are, for example, nonpolar organic solvents such as aromatic and aliphatic hydrocarbons, for example toluene, xylenes, white spirit and products sold under the trade names SHELLSOL (Royal Dutch/Shell Group), Solvesso, and EXXSOL (ExxonMobil). If a solvent is used its boiling temperature or boiling range should be chosen above the reaction temperature. As an alternative, however less preferred, the reaction may be conducted under pressure, e.g. at a pressure of up to 20 bar, preferably up to 10 bar, more preferably up to 5 bar, even more preferably up to 2 bar. The removal of volatile compounds or reaction products can preferably be supported by applying vacuo, e.g. down to 500 mbar, preferably 200, more preferably 100, even more preferably 50, and especially down to 20 mbar. The removal of volatile compounds may further be supported by stripping with an inert gas stream.

Removal of volatile compounds from the reaction mixture also includes an excess of maleic acid anhydride, if any. Usually the content of free unreacted maleic acid anhydride in the reaction mixture is not more than 5 wt%, preferably not more than 2.5 wt%, even more preferably not more than 1 wt%, especially not more than 0.5 wt%.

In a preferred embodiment the reaction is carried out under an inert atmosphere, preferably nitrogen, argon, carbon dioxide or oxygen-depleted air, especially nitrogen.

It is an advantage of the present invention that the maleination of polyisobutene according to the invention with a certain content of ethers PIB-O-R¹ leads to a higher yield in the thermal ene-reaction.

Therefore, another object of the present invention are mixtures comprising a major amount of highly reactive polyisobutene with a content of alpha-double bonds of at least 50 mol% and a minor amount of one or more ethers of the formula

PIB-O-R¹

in which
PIB represents a polyisobutene-residue and
R¹ is C₁- to C₁₀-alkyl
wherein the content of ethers is at least 0.01 wt% and less than 0.8 % by weight.

Another subject matter of the present invention is the use of such mixtures in the reaction with maleic anhydride for the preparation of polyisobutene succinic anhydrides.

### Examples

### Process for Manufacturing of Highly Reactive Polyisobutene (HR PIB)

Examples 1 to 2 which follow in Table 1 were conducted in a continuous polymerization apparatus consisting of a loop reactor, a mixing pump, raw material inlets, recirculation unit for hexane and a quenching/separation vessel. The polymerisation mixture was quenched with hot water after leaving the reactor. The amount of hot water was selected such that the mixing temperature of the two phases was approx. 20° C. This already evaporated a portion of the solvent (unconverted C4 hydrocarbons). After approx. 20 minutes of residence time for settling of the two phases, the upper (organic phase) was removed and product samples were freed of the residual solvent in a rotary evaporator for the analysis. Analytics of resulting polymer were conducted via 1H NMR and GPC. The vinylidene content denotes the content of =CH₂-groups in the polyisobutene determined by 1H NMR.

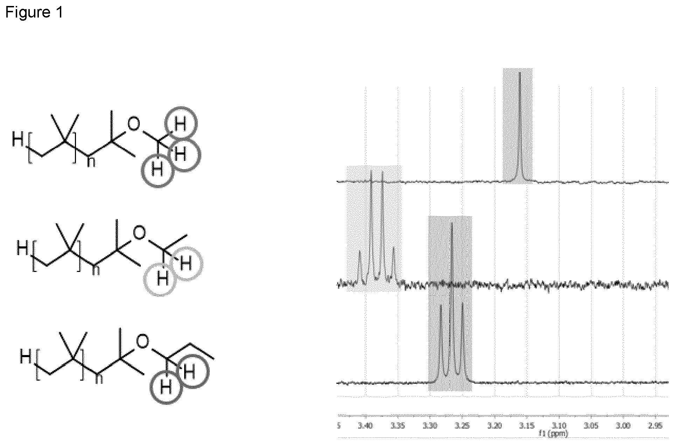

The content of ethers is determined from the integral of the respective hydrogens of the ether group -O-R¹ determined by 1H NMR which usually appears in the range from δ = 3.0 to 3.5 (CDCl₃). The multiplicity of the signal may vary depending on the group R¹, see Figure 1.

### Process for Manufacturing of Polyisobutene Succinic Anhydrides from HR PIB (Mn = 2300 g/mol)

Polyisobutene Succinic Anhydride was synthesized in a pressurised steel reactor under nitrogen atmosphere. After loading the reactor with polyisobutene (1 eq.) of Examples 1 and 2 with the ether content given in the table, the volatiles were removed under reduced pressure at 140 °C. Subsequently maleic acid anhydride (MSA, 1.3 eq.) was added to the reactor and the temperature was raised to 225 °C. After 5 h the reactor was cooled to 100 °C and filtered via pressure nutsch_to remove the residuals formed during the reaction. The excess of MSA was removed via distillation at 180 °C and reduced pressure. The PIBSA yield was determined via column chromatography. Three consecutive PIBSA samples were synthesized without cleaning of the reactor after each batch. The reaction mixtures of the three batches were combined and analysed.

| | | Vinylidene content mol% | PIB ether content mol% | PIBSA yield % | Ratio residual amount/MSA* |
|---|---|---|---|---|---|
| Experimental series 1 | Batch 1 | 84.6 | 0.4 | 67.7 | 0.0055 |
| | Batch 2 | 84.6 | 0.4 | | |
| | Batch 3 | 84.6 | 0.4 | | |
| Experimental series 2 | Batch 1 | 85.9 | 1.5 | 71.7 | 0.0180 |
| | Batch 2 | 85.9 | 1.5 | | |
| | Batch 3 | 85.9 | 1.5 | | |

| | | | | | |
|---|---|---|---|---|---|
| *Values provided in the residual amount column refer to the weight ratio between the formed residual and MSA applied in an experimental series. | | | | | |

The content of the PIB ether in wt% is approximately the same as in mol% given in the table, therefore, experimental series 1 is according to the invention, experimental series 2 is comparative.

It can easily be seen that the amount of the resinous byproduct decreases with decreasing ether content, although the yield also declines. This is nevertheless advantageous for applications in which the amount of byproducts is critical. However, it has to be taken into account that in experimental series 1 the vinylidene content is lower than in series 2, hence, the lower yield can partly be traced back to this lower vinylidene content.

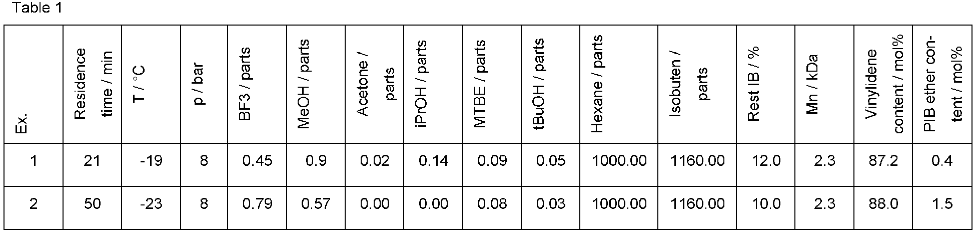

### Abbreviations

- MeOH: methanol
- iPrOH: iso propanol
- MTBE: methyl tert butyl ether
- tBuOH: tert butanol
- IB: isobutene
- PIB: polyisobutene

## Claims

1. Process for the preparation of polyisobutene succinic anhydrides by reacting highly reactive polyisobutene with content of alpha-double bonds of at least 50 mol% (determined by 1H NMR spectroscopy) and maleic anhydride in a stoichiometric molar ratio of 0.6 mole of maleic anhydride : 1 mole of polyisobutene or higher at a temperature of 150 to 260 °C for 15 minutes up to 10 hours, **characterised in that** the highly reactive polyisobutene has a content of one or more ethers of the formula
PIB-O-R¹
in which
PIB represents a residue derived from polyisobutene and
R¹ is C₁- to C₁₀-alkyl
of at least 0.01 wt% and less than 0.8 % by weight (determined by 1H NMR spectroscopy).

2. Process according to claim 1, **characterised in that** the highly reactive polyisobutene has a content of alpha-double bonds of at least 60 mol%.

3. Process according to claim 1, **characterised in that** the highly reactive polyisobutene has a content of alpha-double bonds of at least 70 mol%.

4. Process according to any of the preceding claims, **characterised in that** the maleic anhydride is applied in a molar ratio of 1 or more per 1 mole of the polyisobutene.

5. Process according to any of the claims 1 to 3, **characterised in that** the maleic anhydride is applied in a molar ratio of 1.2 to 3 per 1 mole of the polyisobutene.

6. Process according to any of the preceding claims, **characterised in that** the reaction temperature is from 175 °C to 250 °C.

7. Process according to any of the preceding claims, **characterised in that** the reaction is carried out under an inert atmosphere.

8. Process according to any of the preceding claims, **characterised in that** the reaction is carried out in the absence of a solvent.

9. Process according to any of the preceding claims, **characterised in that**
- in a first step polymerising an isobutene-containing reaction mixture in the presence of at least one *Lewis*-acid in the presence of at least one alkanol R¹OH under reaction conditions so that a polyisobutene is obtained with a content of ethers of the formula PIB-O-R¹ of at least 0.01 wt% and less than 0.8 % by weight,
- in a second step separating unreacted ingredients of the reaction mixture from the polyisobutene-containing product, and
- in a third step reacting the thus obtained ether-containing polyisobutene with maleic anhydride.

10. Process according to claim 9, wherein the Lewis-acid is selected from the group consisting of boron halides, aluminium halides, alkyl aluminium halides, and iron halides.

11. Process according to claim 9 or 10, wherein the alkanol R¹OH is selected from the group consisting of methanol, ethanol, iso-propanol, sec-butanol, and tert.-butanol or mixtures thereof.

12. Process according to any of the claims 9 to 11, wherein the polymerisation in the first step is carried out in a molar ratio of alkanol R¹OH : Lewis-acid of 1 to 2 : 1.

13. Process according to any of the claims 9 to 12, wherein the polymerisation in the first step is carried out in a molar ratio of alkanol R¹OH : isobutene of 0.00025 to 0.0025 : 1.

14. Mixtures comprising a major amount of highly reactive polyisobutene with a content of alpha-double bonds of at least 50 mol% and a minor amount of one or more ethers of the formula
PIB-O-R¹
in which
PIB represents a polyisobutene-residue and
R¹ is C₁- to C₁₀-alkyl
wherein the content of ethers is at least 0.01 wt% and less than 0.8 % by weight.

15. Mixtures according to claim 14, wherein R¹ is C₁- to C₄-alkyl, preferably methyl, ethyl, n-butyl, secondary-butyl, or tert.-butyl.

16. Mixtures according to claim 14 or 15, wherein the content of ethers is from 0.05 to 0.75 % by weight.

17. Use of mixtures according to any of the claims 14 to 16 in the reaction with maleic anhydride for the preparation of polyisobutene succinic anhydrides.

## Patentansprüche

1. Verfahren zur Herstellung von Polyisobutenbernsteinsäureanhydriden durch Umsetzen von hochreaktivem Polyisobuten mit einem Gehalt an alpha-Doppelbindungen von wenigstens 50 mol-% (bestimmt durch 1H-NMR-Spektroskopie) und Maleinsäureanhydrid in einem stöchiometrischen Molverhältnis von 0,6 mol Maleinsäureanhydrid : 1 mol Polyisobuten oder höher bei einer Temperatur von 150 bis 260 °C für 15 Minuten bis zu 10 Stunden, **dadurch gekennzeichnet, dass** das hochreaktive Polyisobuten einen Gehalt an einem oder mehreren Ethern der Formel
PIB-O-R¹
wobei
PIB einen von Polyisobuten abgeleiteten Rest darstellt und
R¹ C₁- bis C₁₀-Alkyl ist,
von wenigstens 0,01 Gew.-% und weniger als 0,8 Gew.-% (bestimmt durch 1H-NMR-Spektroskopie) aufweist.

2. Verfahren nach Anspruch 1, **dadurch gekennzeichnet, dass** das hochreaktive Polyisobuten einen Gehalt an alpha-Doppelbindungen von wenigstens 60 mol-% aufweist.

3. Verfahren nach Anspruch 1, **dadurch gekennzeichnet, dass** das hochreaktive Polyisobuten einen Gehalt an alpha-Doppelbindungen von wenigstens 70 mol-% aufweist.

4. Verfahren nach einem der vorstehenden Ansprüche, **dadurch gekennzeichnet, dass** das Maleinsäureanhydrid in einem Molverhältnis von 1 oder mehr pro 1 mol des Polyisobutens angewendet wird.

5. Verfahren nach einem der Ansprüche 1 bis 3, **dadurch gekennzeichnet, dass** das Maleinsäureanhydrid in einem Molverhältnis von 1,2 bis 3 pro 1 mol des Polyisobutens angewendet wird.

6. Verfahren nach einem der vorstehenden Ansprüche, **dadurch gekennzeichnet, dass** die Reaktionstemperatur 175 °C bis 250 °C beträgt.

7. Verfahren nach einem der vorstehenden Ansprüche, **dadurch gekennzeichnet, dass** die Umsetzung unter einer inerten Atmosphäre durchgeführt wird.

8. Verfahren nach einem der vorstehenden Ansprüche, **dadurch gekennzeichnet, dass** die Umsetzung ohne Vorhandensein eines Lösungsmittels durchgeführt wird.

9. Verfahren nach einem der vorstehenden Ansprüche, **dadurch gekennzeichnet, dass**
- bei einem ersten Schritt ein Isobuten-enthaltendes Reaktionsgemisch unter Einwirkung von wenigstens einer Lewis-Säure unter Einwirkung von wenigstens eines Alkanols R¹OH unter Reaktionsbedingungen polymerisiert wird, so dass ein Polyisobuten mit einem Gehalt an Ethern der Formel PIB-O-R¹ von wenigstens 0,01 Gew.-% und weniger als 0,8 Gew.-% erhalten wird,
- bei einem zweiten Schritt nicht umgesetzte Bestandteile des Reaktionsgemischs von dem Polyisobutenenthaltenden Produkt abgetrennt werden, und
- bei einem dritten Schritt das so erhaltene Etherenthaltende Polyisobuten mit Maleinsäureanhydrid umgesetzt wird.

10. Verfahren nach Anspruch 9, wobei die Lewis-Säure ausgewählt ist aus der Gruppe bestehend aus Borhalogeniden, Aluminiumhalogeniden, Alkylaluminiumhalogeniden und Eisenhalogeniden.

11. Verfahren nach Anspruch 9 oder 10, wobei das Alkanol R¹OH ausgewählt ist aus der Gruppe bestehend aus Methanol, Ethanol, Isopropanol, sec-Butanol und tert-Butanol und Gemischen davon.

12. Verfahren nach einem der Ansprüche 9 bis 11, wobei die Polymerisation bei dem ersten Schritt in einem Molverhältnis von Alkanol R¹OH : Lewis-Säure von 1 bis 2 : 1 durchgeführt wird.

13. Verfahren nach einem der Ansprüche 9 bis 12, wobei die Polymerisation bei dem ersten Schritt in einem Molverhältnis von Alkanol R¹OH : Isobuten von 0,00025 bis 0,0025 : 1 durchgeführt wird.

14. Gemische umfassend eine große größere Menge an hochreaktivem Polyisobuten mit einem Gehalt an alpha-Doppelbindungen von wenigstens 50 mol-% und eine geringe Menge an einem oder mehreren Ethern der Formel
PIB-O-R¹
wobei
PIB seinen Polyisobutenrest darstellt und
R¹ C₁- bis C₁₀-Alkyl ist,
wobei der Gehalt an Ethern wenigstens 0,01 Gew.-% und weniger als 0,8 Gew.-% beträgt.

15. Gemische nach Anspruch 14, wobei R¹ C₁- bis C₄-Alkyl, vorzugsweise Methyl, Ethyl, n-Butyl, sec-Butyl oder tert-Butyl, ist.

16. Gemische nach Anspruch 14 oder 15, wobei der Gehalt an Ethern 0,05 bis 0,75 Gew.-% beträgt.

17. Verwendung von Gemischen nach einem der Ansprüche 14 bis 16 bei der Umsetzung mit Maleinsäureanhydrid zur Herstellung von Polyisobutenbernsteinsäureanhydriden.

## Revendications

1. Procédé pour la préparation d'anhydrides polyisobuténylsucciniques par la réaction de polyisobutène hautement réactif présentant une teneur en doubles liaisons alpha d'au moins 50 % en mole (déterminée par spectroscopie RMN du 1H) et d'anhydride maléique en un rapport molaire stœchiométrique supérieur ou égal à 0,6 mole d'anhydride maléique:1 mole de polyisobutène à une température de 150 à 260 °C pendant 15 minutes et jusqu'à 10 heures, **caractérisé en ce que** le polyisobutène hautement réactif a une teneur en un ou plusieurs éthers de formule
PIB-O-R¹
dans laquelle
PIB représente un résidu issu de polyisobutène et
R¹ est un groupe alkyle en C₁ à C₁₀
d'au moins 0,01 % en poids et inférieure à 0,8 % en poids (déterminée par spectroscopie RMN du 1H).

2. Procédé selon la revendication 1, **caractérisé en ce que** le polyisobutène hautement réactif a une teneur en doubles liaisons alpha d'au moins 60 % en mole.

3. Procédé selon la revendication 1, **caractérisé en ce que** le polyisobutène hautement réactif a une teneur en doubles liaisons alpha d'au moins 70 % en mole.

4. Procédé selon l'une quelconque des revendications précédentes, **caractérisé en ce que** l'anhydride maléique est appliqué en un rapport molaire supérieur ou égal à 1 mole pour 1 mole du polyisobutène.

5. Procédé selon l'une quelconque des revendications 1 à 3, **caractérisé en ce que** l'anhydride maléique est appliqué en un rapport molaire de 1,2 à 3 moles pour 1 mole du polyisobutène.

6. Procédé selon l'une quelconque des revendications précédentes, **caractérisé en ce que** la température de réaction va de 175 °C à 250 °C.

7. Procédé selon l'une quelconque des revendications précédentes, **caractérisé en ce que** la réaction est effectuée sous une atmosphère inerte.

8. Procédé selon l'une quelconque des revendications précédentes, **caractérisé en ce que** la réaction est effectuée en l'absence d'un solvant.

9. Procédé selon l'une quelconque des revendications précédentes, **caractérisé en ce que**
- dans une première étape on polymérise un mélange réactionnel contenant de l'isobutène en présence d'au moins un acide de Lewis en présence d'au moins un alcanol R¹OH dans des conditions de réaction telles qu'on obtient un polyisobutène présentant une teneur en éthers de formule PIB-O-R¹ d'au moins 0,01 % en poids et inférieure à 0,8 % en poids,
- dans une deuxième étape on sépare les ingrédients du mélange réactionnel n'ayant pas réagi du produit contenant du polyisobutène et
- dans une troisième étape on fait réagir le polyisobutène contenant des groupes éther ainsi obtenu avec de l'anhydride maléique.

10. Procédé selon la revendication 9, dans lequel l'acide de Lewis est choisi dans le groupe constitué par les halogénures de bore, les halogénures d'aluminium, les halogénures d'alkylaluminium et les halogénures de fer.

11. Procédé selon la revendication 9 ou 10, dans lequel l'alcanol R¹OH est choisi dans le groupe constitué par le méthanol, l'éthanol, l'isopropanol, le sec-butanol et le tert-butanol ou les mélanges de ceux-ci.

12. Procédé selon l'une quelconque des revendications 9 à 11, dans lequel la polymérisation dans la première étape est effectuée en un rapport molaire alcanol R¹OH:acide de Lewis de 1 à 2:1.

13. Procédé selon l'une quelconque des revendications 9 à 12, dans lequel la polymérisation dans la première étape est effectuée en un rapport molaire alcanol R¹OH:isobutène de 0,00025 à 0,0025:1.

14. Mélanges comprenant une quantité majoritaire de polyisobutène hautement réactif présentant une teneur en double liaisons alpha d'au moins 50 % en mole et une quantité minoritaire d'un ou plusieurs éthers de formule
PIB-O-R¹
dans laquelle
PIB représente un résidu de polyisobutène et
R¹ est un groupe alkyle en C₁ à C₁₀
dans lesquels la teneur en éthers est d'au moins 0,01 % en poids et inférieure à 0,8 % en poids.

15. Mélanges selon la revendication 14, dans lesquels R¹ est un groupe alkyle en C₁ à C₄, de préférence méthyle, éthyle, n-butyle, sec-butyle ou tert-butyle.

16. Mélanges selon la revendication 14 ou 15, dans lesquels la teneur en éthers va de 0,05 à 0,75 % en poids.

17. Utilisation de mélanges selon l'une quelconque des revendications 14 à 16 dans la réaction avec de l'anhydride maléique pour la préparation d'anhydrides polyisobuténylsucciniques.
